# EUROPEAN PATENT APPLICATION

(11) **EP 1 942 606 A1**
(43) Date of publication of application: **09.07.2008**
(21) Application number: 07721664.6
(22) Date of filing: 22.05.2007
(51) Int. Cl.: H04L 12/26

(54) **METHOD AND NODE DEVICE OF RESERVING NETWORK RESOURCES**

(30) Priority: 23.05.2006 CN 200610081056
(71) Applicant: Huawei Technologies Co., Ltd., Longgang District Shenzhen 518129 (CN)
(72) Inventor: GAO, Jianhua, Shenzhen, Guangdong 518129 (CN)
(74) Representative: Körber, Martin Hans
(86) International application number: PCT/CN2007/070041
(87) International publication number: WO 2007/134551

(57) **Abstract**

The present invention provides a method and node apparatus for reserving network resources. The method includes: obtaining a logic transport network identifier of a logic transport network carried in a resource reserve request; and reserving link resources for the logic transport network corresponding to the logic transport network identifier. The node apparatus mainly includes a first module and a second module. Embodiments of the present invention can classify and manage the resources of the physical transport network fast and flexibly, which significantly improves the resource allocation speed of the physical transport network.

## Description

### Field of the Invention

The present invention relates to network communication technologies, and particularly, to a method and a node apparatus for reserving network resources.

### Background of the Invention

Physical resources, such as link width of transport networks are continuously growing. The physical resources can be divided into more specific classes logically according to service demands of clients in practical applications. A physical transport network can also be divided directly into multiple logical transport networks. The topology of each of the logical transport networks may be the same as or different from the physical transport network. The logical transport networks over the physical transport network may satisfy the needs of different types of client services.

For example, the physical transport network can be divided into three different logical transport networks by dividing the resources of the physical transport network. One is used for IP services, one is used for Asynchronous Transfer Mode (ATM) services and the third is used for Synchronous Digital Hierarchy (SDH) or Synchronous Optical Network (SONET) services.

Internet Engineering Task Force (IETF) Common Control and Measurement Plane (CCAMP) workgroup is working on an effective method for managing multiple layer networks. Virtual Network Topology (VNT) put forward by the IETF CCAMP workgroup is supposed to manage internal physical resources of a transport network effectively. IETF Layer-1 Virtual Private Network (L1 VPN) workgroup is also working on an effective method for managing the resources of the physical transport network with L1 VPN technology to meet the needs of L1 VPN networks.

In varieties of methods (e.g. VNT, L1VPN) for classifying and managing the resources of the transport network, a fast and effective network resource reservation is critical in the transport network.

A conventional method for classifying and managing the resources of the transport network is a centralized resource management method. According to the method, an administrator classifies and manages the resources of the transport network manually in a centralized manner, and gives a specified Virtual Private Network (VPN) identifier to each classified link resource. The VPN identifier is used for determining VPN link resources available to a link resource on the control plane.

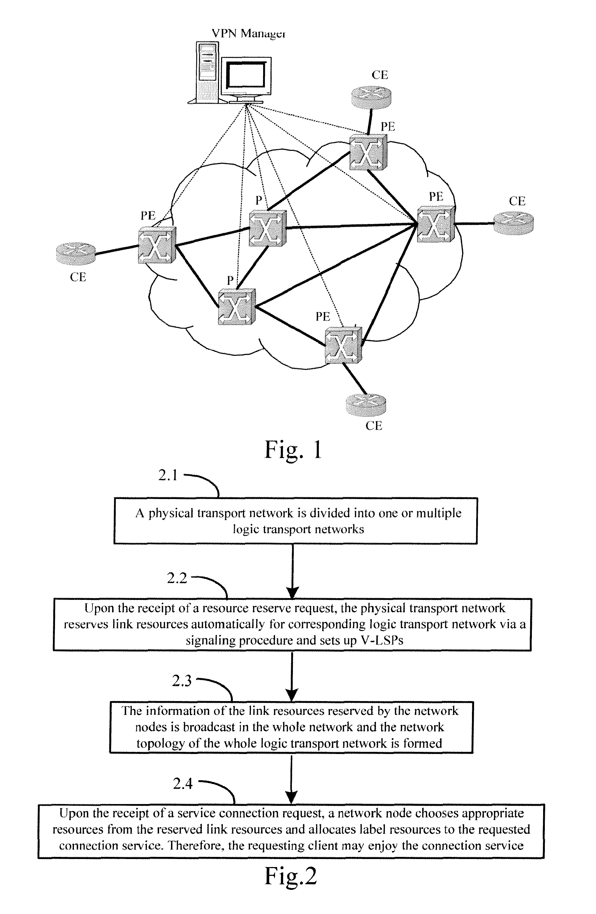

Figure 1 shows a management model of a centralized resource management method. The management model includes Customer Edges (CEs), Provider Edge routers (PEs), Provider router (Ps) and a VPN Manager for managing resources in a centralized manner. In the management model, the following processes are performed for VPN resource reservation service within the network.
1. An administrator determines, via planning, a topology map with Traffic Engineering (TE) attributes among VPN members.
2. The administrator further determines, according to the topology map, nodes through which the internal topology of the network passes, and determines bandwidth information of link resources which need to be reserved between each two nodes.
3. The administrator determines, according to the bandwidth information of the link resources needed to be reserved between each two nodes, information of ingresses and egresses of the nodes related to the reserved link resources within the network and bandwidth information of link resources which need to be reserved for the ingresses and the egresses.
4. The administrator configures, according to the information of the ingresses and egresses of the related nodes, reserved link resources for the related nodes (including PE nodes and P nodes) one by one by using the VPN Manager.
5. After the configuration, the information of the ingresses and egresses and link resources reserved for the VPN is transmitted to the control plane via automatic resource discovery or manual local configuration. A VPN reserved resource pool is formed on the control plane. When a VPN connection request is received, the control plane requests and allocates available resources for the VPN connection from the VPN reserved resource pool.

The disadvantages of this conventional method for classifying and managing the resources of the transport network are described as follows.
1. The resources of the transport network can not be classified and managed flexibly.
2. The resources of each link in the transport network involved in the VPN topology are classified and managed manually by an administrator according to the conventional method of classifying in a centralized manner, which results in low efficiency and high error ratio.
3. If the transport network consists of multiple transport network domains, the centralized management of one transport network domain can not deal with resource classifying and managing in other transport network domains. Therefore, fast and flexible point-to-point resources classification can not be implemented when the VPN extends across multiple transport network domains.
4. When the transport network fails, new link resources are required to be allocated for the logic transport network topology, such as affected VPN, which is not favorable for fast update and recovery of the logic transport network topology.

### Summary

Embodiments of the present invention provide a method and a node apparatus for reserving network resources, by which fast and flexible classification and management of the resources of a physical transport network are possible and by which the resource allocation speed of the physical transport network is increased.

This object of the embodiments of the present invention is achieved by the following method, system and apparatus.

A method for reserving network resources which includes:
obtaining, by a physical transport network, a logic transport network identifier of a logic transport network and resource configuration information carried in a resource reserve request after receiving the resource reserve request; and
reserving, by the physical transport network, link resources for the logic transport network corresponding to the logic transport network identifier according to the resource configuration information.

A node apparatus for reserving network resources includes:
a resource reservation request processing module, adapted to receive a resource reserve request from a resource manager or a client equipment, acquire a logic transport network identifier of a logic transport network and resource configuration information carried in the resource reserve request, and send the resource reserve request to other network nodes on an explicit route; and
a resource reservation module, adapted to reserve link resources for the logic transport network corresponding to the logic transport network identifier carried in the resource reserve request.

Thus, it can be seen that by the method and the node apparatus of the embodiments of the present invention link resources are reserved for corresponding logic transport network automatically by using signaling. Therefore, resources of a physical transport network can be classified and managed fast and flexibly and the resource allocation speed of logic transport networks such as VPNs is increased.

### Brief Description of the Drawings

Figure 1 is a schematic diagram of a management model of a centralized resource management method according to the prior art;
Figure 2 is a simplified flowchart illustrating the procedure of the method in accordance with an embodiment of the present invention;
Figure 3 is a schematic diagram illustrating the topology of a physical transport network in accordance with an embodiment of the present invention;
Figure 4 is a schematic diagram illustrating the Virtual Label Switched Path (V-LSP) topology of VPN A in accordance with an embodiment of the present invention;
Figure 5 is a schematic diagram illustrating the V-LSP topology of VPN B in accordance with an embodiment of the present invention;
Figure 6 is a schematic diagram illustrating a connection service provided in response to a client request in accordance with an embodiment of the present invention; and
Figure 7 is a schematic diagram illustrating a re-routing procedure and an establishment of a new reserved path V-LSP which are initiated by network nodes of an affected V-LSP in accordance with an embodiment of the present invention.

### Detailed Description of the Invention

The embodiments of the present invention provide a method, a system and a node apparatus for reserving network resources. Upon the receipt a resource reserve request, a transport network automatically reserves link resource for a corresponding logic transport network by using a signaling procedure.

Embodiments of the present invention are hereinafter described in detail with reference to the accompanying drawings. As shown in Figure 2, the workflow of an embodiment of the method in accordance with this invention includes the processes described as follows.

Block 2.1: A physical transport network is divided into one or multiple logic transport networks.

According to the embodiment of the present invention, the physical transport network needs to be divided into one or multiple logic transport networks in order to achieve flexible management of the resources in the physical transport network, so that the physical transport network may meet the needs of different client services.

According to actual needs of a client service, a resource manager of the physical transport network may set up one or more link resources with certain Traffic Engineering (TE) attributes along a group of specified network edge nodes of the physical transport network. In this way, the specified network edge nodes are member nodes of a logic transport network, e.g. PE nodes in a VPN network. The resource manager assigns a unique global ID, e.g. VPN ID, to this logic transport network. Then the resource manager repeats the procedure in order to divide the physical transport network into multiple logic transport networks. The resource manager may be set in a Network Management System (NMS) of the physical transport network, or in a VNT manager, or in a VPN manager, or in a specified network node of the physical transport network, or in a stand alone resource management server.

Block 2.2: Upon the receipt of a resource reserve request, the physical transport network reserves link resources automatically for corresponding logic transport network via a signaling procedure and sets up V-LSPs.

After the physical transport network is divided into multiple logic transport networks, the resource manager sends the resource reserve request to one or multiple related edge nodes of the transport network when link resources are needed to be reserved for a logic transport network. Reserve request parameters carried in the resource reserve request mainly include:
1. an LSP type as V-LSP, i.e. reserving link resources without assigning labels;
2. an ID of a home VPN or a home logic transport network of the V-LSP;
3. a destination node identifier of the V-LSP;
4. bandwidth value of link resources to be reserved for the V-LSP;
5. shared attribute information indicating how the resources reserved for the V-LSP can be shared among different VPNs, e.g. value 1 indicating dedicated reserved resources, value m (m>1) indicating that the reserved resources can be shared by m VPNs at maximum;
6. shared attribute information indicating how the resources reserved for the V-LSP can be shared among different V-LSPs of the same VPN, e.g. value 1 indicate dedicated reserved resources, value n (n>1) indicates that the reserved resources can be shared by n V-LSPs at maximum;
7. specified loose or strict of explicit route information and identifier information of the specific link resources that need to be reserved (e.g. information indicating that resources with wavelength λx on a link in the network should be reserved).

The parameters of 1 to 4 are mandatory and the information of 5 - 7 is optional.

Upon the receipt of the resource reserve request, a source edge node in the physical transport network acquires a loose or strict of explicit route information of a destination edge node according to specified explicit route information or a routing request. Then the source edge node sends the received resource reserve request to the destination edge node in a signaling procedure along one or multiple intermediate nodes.

Upon the receipt of the resource reserve request, the source edge node, each of the intermediate nodes and the destination edge node respectively reserve link resources for an ingress and an egress of itself, and identify ownership and shared attribute information of the reserved link resources. The preceding procedure does not involve the assignment of node label resources or node cross connections, but only the reservation of the link resources for the ingress and the egress corresponding to the nodes.

When the resource reservation is completed on the source edge node, the intermediate nodes and the destination edge node, a V-LSP is set up between the source edge node and the destination edge node.

After that, network nodes on the V-LSP returns information of network nodes on the V-LSP and reserved link resources to the resource manager or corresponding path computation server.

The resource reserve request of the physical transport network in the preceding description is initiated by the resource manager of the physical transport network. In practical applications, the resource reserve request can be initiated by client equipment. The procedure for initiating the resource reserve request and reserving the resources is similar to that initiated by the resource manager in the preceding description.

Block 2.3: The information of the link resources reserved by the network nodes is broadcast in the whole network and the network topology of the whole logic transport network is formed.

When resources of one or more links are reserved for the logic transport network and one or more V-LSPs are set up, the network nodes on the one or more V-LSPs distribute the information of the reserved link resources of the network nodes in the network through a route spread mechanism, e.g. distribute the information to all other nodes in the network or to all path computation servers in the network.

The network nodes may distribute the dedicated reserved link resources of a logic transport network in following two ways.
1. The network nodes on the V-LSP distribute, to the whole network, information including: a link ID, remaining bandwidth, bandwidth value of the link resources and ID of a home logic transport network or VPN ID information.
   When the link ID, remaining bandwidth, bandwidth value of the link resources and the ID of the home logic transport network or VPN ID are distributed to all other network nodes in the network, these nodes update a local database saving global TE information according to the distributed link ID and remaining bandwidth, and member nodes of the logic transport network in the physical transport network (e.g. the PE member nodes of the VPN) update a TE database of the logic transport network according to all the distributed information.
   When the link ID, remaining bandwidth, bandwidth value of the link resources and the ID of the home logic transport network or VPN ID are distributed to the path computation server in the network, the path computation server updates the TE database of the logic transport network and the local database saving global TE information according to all of the distributed information.
2. When the link ID and remaining bandwidth of the reserved link resources are distributed to at least one of all other network nodes and the path computation server in the network, the at least one of all other network nodes and the path computation server in the network update the local database saving global TE information according to the distributed information.

When the V-LSP is set up, end nodes of the V-LSP (i.e. at least one of the source node and the destination node of the V-LSP) can learn all the network nodes on the V-LSP and reserved link resources according to route information recorded in the signaling mechanism or explicit route information specified in the resource reserve request. After learning the network nodes on the V-LSP and the reserved link resources, the end nodes interact with the member nodes of the logic transport network through an automatic discovery mechanism, explained below, of member nodes of the logic transport network to exchange information of the network nodes on the V-LSP and reserved link resources. Then the end nodes update the TE database of the logic transport network according to the exchanged information. Alternatively, after learning the network nodes on the V-LSP and the reserved link resources, the end nodes distribute the information thereof to the path computation server and the path computation server updates the TE database of the logic transport network according to the distributed information.

The network nodes may distribute the reserved link resources shared by multiple logic transport networks in the following two ways.
1. The network nodes on the V-LSP distribute, to the whole network, information including: the link identifier, remaining bandwidth, bandwidth value of the reserved link resources, the ID of the home logic transport network or VPN ID information of the reserved resources and shared attribute information of the reserved link resources.
   When the link ID, remaining bandwidth, bandwidth value of the reserved link resources, the ID of the home logic transport network or VPN ID of the reserved link resources and shared attribute information of the reserved resources are distributed to all other network nodes in the network, these nodes update a local database saving global TE information according to the distributed link ID, remaining bandwidth, bandwidth value of the reserved link resources and shared attribute information of the reserved resources. Member nodes of the logic transport network corresponding to the ID of the home logic transport network update a TE database of the logic transport network according to all the distributed information.
   When the link ID, remaining bandwidth, bandwidth value of the reserved link resources, the ID of the home logic transport network or VPN ID of the reserved link resources and shared attribute information of the reserved link resources are distributed to the path computation server in the network, the path computation server updates the TE database of the logic transport network corresponding to the ID of the logic transport network and the local database saving global TE information according to all the distributed information.
2. When the link ID, remaining bandwidth, bandwidth value of the reserved link resources and shared attribute information of the reserved link resources are distributed to all other network nodes or the path computation server in the network, at least one of the other network nodes and the path computation server in the network update the local database saving global TE information according to the link ID and the remaining bandwidth.
   When the V-LSP is set up, the end nodes of the V-LSP can learn all the network nodes on the V-LSP and reserved link resources according to the route information recorded in the signaling mechanism or explicit route information specified in the resource reserve request. After learning the network nodes on the V-LSP and the reserved link resources, the end nodes interact with the member nodes of the logic transport network through the automatic discovery mechanism of member nodes of the logic transport network to exchange information of the network nodes on the V-LSP and reserved link resources. Then the end nodes update the TE database of the logic transport network according to the exchanged information. Alternatively, after learning the network nodes on the V-LSP and the reserved link resources, the end nodes distribute the information thereof to the path computation server and the path computation server updates the TE database of the logic transport network according to the distributed information.

The automatic discovery mechanism in the two ways of distributing the link resources is an automatic discovery mechanism based on Border Gateway Protocol (BGP) or Interior Gateway Protocol (IGP).

According to the way of distributing the reserved link resources by the network nodes, when all V-LSPs in a logic transport network are set up and all reserved link resources are distributed in the network, a network TE topology of the whole logic transport network is formed in at least one of the member nodes of the logic transport network and the path computation server.

Block 2.4: Upon the receipt of a service connection request, a network node chooses appropriate resources from the reserved link resources and allocates label resources to the requested connection service. Therefore, the requesting client can use the connection service.

When the network topology of the whole logic transport network is generated and the network node receives the service connection request from the client of the logic transport network, the network node chooses appropriate resources from the resources reserved for the logic transport network and allocates the label resources for the requested connection service. Then the network node sets up a cross connection and a label switched path, so that the logic transport network may provide the connection service for the client.

When a network node or a link fails in the physical transport network, a network node that detects the failure finds out the affected V-LSPs by analyzing the failure, and further finds out the resources reserved for the V-LSPs and the home logic transport networks of the V-LSPs. Then, a signaling procedure for protecting or restoring the V-LSPs is initiated on the control plane to find new available physical transport network resources for the logic transport networks affected by the failure, and a new network topology of the whole logic transport network is generated. Therefore the new network topology of the logic transport network can be updated at real-time to avoid the failure in the physical transport network.

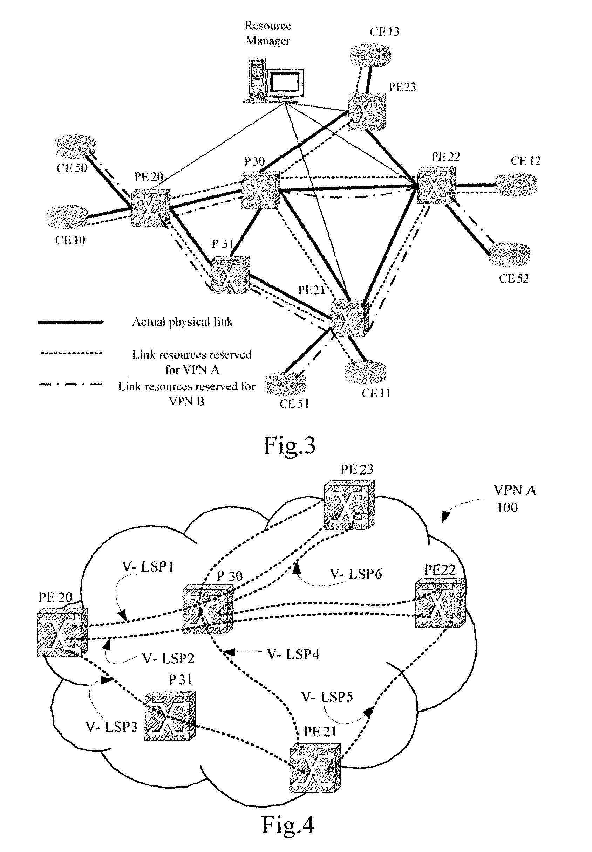

An embodiment of a method provided by the present invention is explained hereinafter. Figure 3 shows the topology of a physical transport network in the embodiment.

As shown in Figure 3, the physical transport network includes network edge nodes PE20, PE21, PE 22 and PE23, internal nodes P30 and P31 and physical links connecting the network nodes. A resource manager of the physical transport network is directly connected to the network edge nodes via a Data Communication Network (DCN). Client equipments CE10, CE11, CE12 and CE 13 form a group of clients; client equipments CE50, CE51 and CE52 form another group of clients.

The resources of the physical transport network in Figure 3 are classified into two logic transport networks VPN A and VPN B to satisfy the needs of the two groups of clients. VPN A supports the transmission service among CE10, CE11, CE12 and CE13, and VPN B supports the transmission service among CE 50, CE51 and CE52. The remaining transport resources of the physical transport network can be used for public transmission for other clients.

As for the physical transport network shown in Figure 3, the resource reservation procedure in accordance with the embodiment of the present invention includes the processes described as follows.
1. The network edge node PE20 receives a link resource reserve request for reserving a V-LSP resource reserve path for VPN A in the physical transport network.
   Reserve request parameters in the link resource reserve request may include, for example: destination network edge node of the resource reserve path, as PE23, bandwidth value of the reserved link resources, as 622M, shared attribute information of the link resources on the V-LSP as shared by all reserved paths in the VPN and available to reserved paths of other VPNs. Particularly, the reserved resources can be shared by four different VPNs at maximum.
2. PE20 requests path computation at a path computation server according to the reserve request parameters in the link resource reserve request, and a path to PE23 through P30 and in compliance with the reserve request parameters is thus determined by path computation.
   PE20 reserves, according to the reserve request parameters in the link resource reserve request, link resources of bandwidth 622M between PE20 and P30 and configures the link resources as: reserved for VPN A, available for sharing by all path reserve requests in VPN A and available for sharing by four different VPNs at maximum. Then PE20 forwards the received link resource reserve request to P30.
3. Upon the receipt of the link resource reserve request from PE20, P30 reserves, according to the reserve request parameters in the link resource reserve request, the same link resources of bandwidth 622M between PE20 and P30, reserves link resources of bandwidth 622M between P30 and a downstream node PE23 and forwards the received link resource reserve request to PE23. At the same time, P30 configures corresponding ingress and egress resources as: reserved for VPN A, available for sharing by all path reserve requests in VPN A and available for sharing by 4 different VPNs at maximum.
   Similarly, PE23 reserves bandwidth for corresponding port and configures the shared attributes information of the reserved link resources upon receipt of the resource reserve request from P30.
   When PE20, P30 and PE23 complete the resource reservation, PE23 returns the result of the reservation to the source node PE20. A V-LSP between PE20 and P30 is set up and is called V-LSP hereinafter.
4. Network edge node PE20 receives a link resource reserve request for reserving another V-LSP resource reserve path for VPN A in the transport network and the reserve request parameters in the link resource reserve request include: destination network edge node of the resource reserve path, as PE22, bandwidth value of the reserved link resources; as 155M, shared attribute information of the link resources of the V-LSP as dedicated within the VPN and unavailable to reserved paths of other VPNs.
   So PE20 repeats operations in the preceding description from 2 to 3 and reserves resources for dedicated link V-LSP2 of VPN A in the physical transport network.

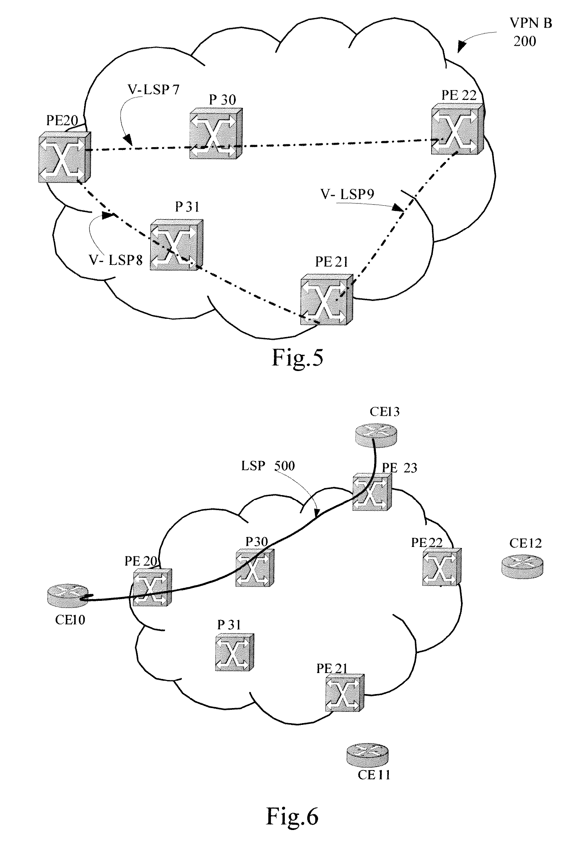

The network nodes of the physical transport network in Figure 3 repeat the operations in the preceding description from 2 to 3 until all path reservations for VPN A and VPN B are completed and corresponding V-LSPs are set up in VPN A and VPN B. The V-LSP topologies of VPN A and VPN B are shown in Figures 4 and 5.

At the same time, the network nodes on V-LSPs in the transport network record link resource reservation information related to the V-LSPs, as shown in Table 1.

**Table 1: Link Resource Reservation Information Related to the V-LSPs and Recorded in network Nodes**

| V-LSP ID | Home VPN | VPN Internal Shared Attribute Information of Reserved Link Resources | VPN External Shared Attribute Information of Reserved Link Resources | Bandwidth Value of Reserved Link Resources |
|---|---|---|---|---|
| V-LSP 1 | VPN A | Shared | Shared | 622M or 4*VC4 |
| V-LSP 2 | VPN A | Dedicated | Dedicated(only) | 155M or 1*VC4 |
| V-LSP 3 | VPN A | Shared | Dedicated | 155M or 1*VC4 |
| V-LSP 4 | VPN A | Shared | Shared | 622M or 4*VC4 |
| V-LSP 5 | VPN A | Shared | Dedicated | 155M or 1*VC4 |
| V-LSP 6 | VPNA | Shared | Shared | 622M or 4*VC4 |
| V-LSP 7 | VPN B | Shared | Shared | 622M or 4*VC4 |
| V-LSP 8 | VPN B | Shared | Dedicated | 622M or 4*VC4 |
| V-LSP9 | VPN B | Shared | Dedicated | 622M or 4*VC4 |
| | | | | |
| V-LSP n | VPN X | Shared | Shared | kM or m*VC4 |

When a loose bandwidth of link resources of a physical link in the network are reserved for a VPN, the bandwidth information of the reserved link resources of the physical link should be distributed to other network nodes or a path computation server in the network through a routing mechanism, so that a related link status database can be updated. The distributed information mainly includes: remaining public bandwidth of the link resources, bandwidth of the link resources reserved for VPNx from the link and shared attributes, the maximum number of times allowed for sharing a loose bandwidth of the reserved link resources and the number of times already reserved for sharing. The network nodes or path computation server that receives the distributed information updates corresponding TE link status database.

After resource reservation and link status update, the network nodes or path computation server generates topology information of the link resources reserved for the VPN in the network.

Furthermore, in the signaling procedure of resource reservation, the signaling procedure may record the network nodes on the V-LSP and the results of the link resource reservations among the network nodes. And the recorded information of network nodes on the V-LSP and the reserved link resources on the V-LSP is exchanged among PE members of the VPN through the automatic discovery mechanism based on BGP or IGP. When the path information interaction among VPN members is completed, all PE members of the VPN obtain the TE topology information of the link resources reserved for the VPN in the network.

In the network shown in Figure 3, when resource reservations for VPN A and VPN B are completed, corresponding information of the reserved link resources is distributed in the network, and the automatic discovery among VPN members is performed through the route information recorded of the signaling mechanism. The network nodes or path computation server in the network generates link resource reservation status information, as shown in Table 2.

**Table 2: Link Resource Reservation Status Information Generated in the Network nodes or path computation server**

| Link ID | Total Bandwidth Value Reserved for the Link Resources | Dedicated Bandwidth Value Reserved for the Link Resources | Shared Bandwidth Value Reserved for the Link Resource | Maximum Number of Times Allowed for Sharing the Shared Resources / Number of Times Already Shared |
|---|---|---|---|---|
| PE20-P23 | 5*VC4 | VPNA/1*VC4 | 4*VC4 Shared by VPN A and VPN B | 4/2 |
| PE20-P31 | 4*VC4 | | 4*VC4 Shared by VPN A and VPN B | 3/2 |
| P30-PE22 | 5*VC4 | VPNA/1*VC4 | 4*VC4 Shared by VPN A and VPN B | 4/2 |
| P30-PE23 | 4*VC4 | | 4*VC4 Shared by VPN A and VPN B | 4/2 |
| P30-PE21 | 4*VC4 | | 4*VC4 Shared by VPN A | 4/1 |
| P31-PE21 | 5*VC4 | VPNA/1*VC4 VPNB/4*VC4 | | 1/1 |
| PE21-PE22 | 5*VC4 | VPNA/1*VC4 VPNB/4*VC4 | | 1/1 |

The resources reserved for the VPN can be used by client connection requests of the VPN. When a network node receives a connection request of a VPN, the network node allocates appropriate label resources in response to the connection request from the resources reserved for the VPN.

For example, client equipment CE10 in VPN A network in Figure 3 needs to set up a connection with a bandwidth of 1 *VC4 to client equipment CE13. Therefore, in the signaling procedure, network nodes PE20, P30 and PE23 respectively choose appropriate label resources from the link resources reserved for VPN A and set up cross connections. Therefore, the connection from CE 10 to CE13 is set up as requested and a connection service is provided as LSP500 shown in Figure 6.

When a failure occurs in the physical transport network, the control plane chooses other available resources in the physical transport network and performs resource reservation again through a restoration mechanism in which a new path is chosen for the V-LSP affected by the failure. For example, when the fiber link between PE23 and P30 fails in the physical transport network shown in Figure 3, both P30 and PE23 detect the link failure and determine that the failure affects V-LSP1, V-LSP4 and V-LSP6 in VPN A. The network nodes on the affected V-LSPs in the network initiate re-routing restoration.

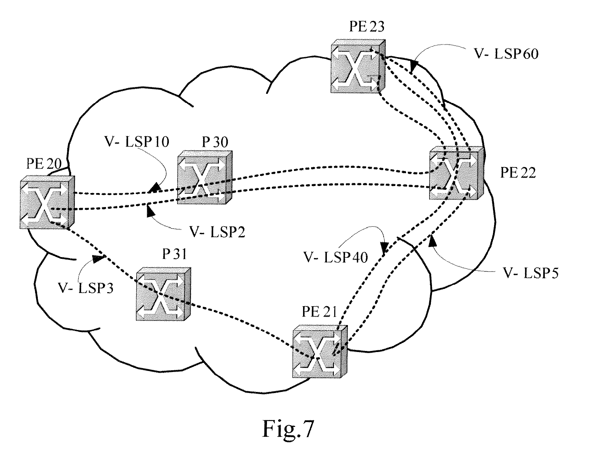

As shown in Figure 7, node PE20 of V-LSP1 in the network initiates the re-routing restoration of V-LSP1 and sets up a new reserved path V-LSP10 which passes through PE20, P30, PE22 and PE23. Node PE21 of V-LSP4 in the network initiates the re-routing restoration of V-LSP4 and sets up a new reserved path V-LSP40 which passes through PE21, PE22 and PE23. Node PE22 of V-LSP6 in the network initiates the re-routing restoration of V-LSP6 and sets up a new reserved path V-LSP60 which passes through PE22 and PE23. After the re-routing restoration procession for the V-LSPs affected by the failure in the physical transport network, new available resources are chosen from the physical transport network to set up new V-LSPs, so that the failure in the physical transport network can be avoided. Therefore, the VPN clients are provided with a real-time and available connectivity service.

The logic transport networks in the embodiments of the present invention mainly include VPN networks, especially L1VPN networks or VNT networks.

To sum up, embodiments of the present invention provide solutions for reserving link resources automatically for corresponding logic transport networks through signaling procedure. Embodiments of the present invention have advantages described as follows.
1. The resources of the physical transport network are classified and managed flexibly and fast, which greatly improves the resource allocation speed of the logic transport network such as VPN.
2. The topology of the logic transport network, e.g. VPN, is adjusted dynamically according to the failure of the physical transport network, which guarantees normal operation of the client network topology and improves the availability of the logic transport network.
3. The resources of the physical transport network may be utilized with high efficiency.

The foregoing are only exemplary embodiments of the present invention. The protection scope of the present invention, however, is not limited to the above description. Any alteration or substitution that is within the technical scope disclosed by the present invention and can easily be realized by those skilled in the art should be covered by the protection scope of the present invention. Therefore, the protection scope of the present invention should be determined by the appended claims.

## Claims

1. A method for reserving network resources, comprising:
obtaining, by a physical transport network, a logic transport network identifier of a logic transport network and resource configuration information carried in a resource reserve request after receiving the resource reserve request; and
reserving, by the physical transport network, link resources for the logic transport network corresponding to the logic transport network identifier according to the resource configuration information.

2. The method of Claim 1, wherein the resource configuration information carries:
bandwidth information of the link resources, information of a source node and a destination node.

3. The method of Claim 2, wherein the resource configuration information further carries anyone selected from a group consisting of:
shared attribute information of the bandwidth of the link resources, information of an explicit route and identifier information of the link resources.

4. The method of Claim 1, wherein the logic transport network is any one selected form a group consisting of:
a Virtual Private Network, a Layer-1 Virtual Private Network, and a Virtual Network Topology network.

5. The method of Claim 1, 2, 3 or 4, wherein reserving the link resources for the logic transport network corresponding to the logic transport network identifier comprises:
determining, by the source node in the physical transport network upon the receipt of the resource reserve request sent from a resource manager or a client equipment, the information of the explicit route between the source node and the destination node;
reserving, by the source node, the link resources for an ingress and an egress corresponding to the source node, identifying the ownership and shared attribute information of the link resources, and forwarding the resource reserve request to other nodes comprising the destination node on the explicit route node by node, wherein,
reserving the link resources for an ingress and an egress corresponding to the network node, and identifying the ownership and shared attribute information of the link resources; and
establishing a Virtual Label Switched Path, V-LSP, between the source node and the destination node.

6. The method of Claim 5, further comprising at least one of:
sharing the link resources of the V-LSP among different logic transport networks according to the shared attribute information of the bandwidth of the link resources carried in the resource reserve request; and
sharing the link resources of the V-LSP among different V-LSPs within the logic transport network according to the shared attribute information of the bandwidth of the link resources carried in the resource reserve request.

7. The method of Claim 5, further comprising at least one of:
interacting with, by the source node and the destination node of the V-LSP through an automatic discovery mechanism of the logic transport network, member nodes of the logic transport network to exchange information of the network nodes on the V-LSP and the link resources after determining the information of the network nodes on the V-LSP and the link resources on the V-LSP, and updating, by the member nodes of the logic transport network, a Traffic Engineering, TE, database of the logic transport network according to the information of the network nodes on the V-LSP and the link resources; and
distributing, by the source node and the destination node of the V-LSP, the information of the network nodes on the V-LSP and the link resources to a path computation server in the logic transport network after determining the information of the network nodes on the V-LSP and the link resources on the V-LSP, and updating, by the path computation server, the TE database of the logic transport network according to the information of the network nodes on the V-LSP and the link resources.

8. The method of Claim 7, further comprising:
determining, by the source node and the destination node of the V-LSP, the network nodes on the V-LSP and the link resources by using route information recorded in a signaling mechanism or specified explicit route information in the resource reserve request.

9. The method of Claim 7, wherein the automatic discovery mechanism of the logic network is:
a discovery mechanism on the basis of Border Gateway Protocol or Interior Gateway Protocol.

10. The method of Claim 5, further comprising:
distributing, by the network nodes on the V-LSP, in a physical transport network the information of the link resources through a route spread mechanism.

11. The method of Claim 10, wherein distributing the information of the link resources in the physical transport network comprises: the link resources are dedicated link resources for the logic transport network, the distributed information of the link resources comprises: a link ID and a remaining bandwidth;
updating, by all the network nodes in the physical transport network or a path computation server, a local database saving global TE information according to the information of the link resources.

12. The method of Claim 10, wherein distributing the information of the link resources in the physical transport network comprises: the link resources are dedicated link resources for the logic transport network, the distributed information of the link resources comprises: a link ID, a remaining bandwidth, bandwidth value of the link resources and an identifier of the logic transport network;
updating, by all the network nodes in the logic transport network or a path computation server, a TE database of the logic transport network according to the information of the link resources; and
updating, by all the network nodes in the physical transport network or the path computation server, a local database saving global TE information according to the information of the link resources.

13. The method of Claim 10, wherein distributing the information of the link resources in the physical transport network comprises: the link resources are shared by multiple logic transport networks, the distributed information of the link resources comprises: a link ID, a remaining bandwidth, bandwidth value of the link resources and shared attributes information of the link resources;
updating, by all the network nodes in the physical transport network or a path computation server, a local database saving global TE information according to the information of the link resources.

14. The method of Claim 10, wherein distributing the information of the link resources in the physical transport network comprises: the link resources are shared by multiple logic transport networks, the distributed information of the link resources comprises: link ID, remaining bandwidth, bandwidth value of the link resources, shared attributes information of the link resources and an identifier of the home logic transport network;
updating, by all the network nodes in the logic transport network corresponding to the identifier of the home logic transport network or a path computation server, a TE database of the logic transport network according to the information of the link resources; and
updating, by all the network nodes in the physical transport network or the path computation server, a local database saving global TE information according to the information of the link resources.

15. The method of any of Claims 1 to 4, further comprising:
allocating, by the logic transport network upon the receipt of a client service request, label resources from the link resources to a client service;
setting up an end-to-end cross connection; and
providing a connectivity service to the client service.

16. The method of any of Claims 1 to 4, further comprising:
determining, by a network node in the physical transport network that detects a failure when the failure occurs in the physical transport network, link resources affected by the failure and a V-LSP corresponding to the logic transport network; and
reserving new link resources for the logic transport network affected by the failure through a protection or restoration signaling procedure executed for the V-LSP initiated by a control plane.

17. A node apparatus for reserving network resources, comprising:
a resource reservation request processing module, adapted to receive a resource reserve request from a resource manager or a client equipment, acquire a logic transport network identifier of a logic transport network and resource configuration information carried in the resource reserve request, and send the resource reserve request to other network nodes on an explicit route; and
a resource reservation module, adapted to reserve link resources for the logic transport network corresponding to the logic transport network identifier carried in the resource reserve request according to the resource configuration information.

18. The node apparatus of Claim 17, further comprising at least one of:
a logic transport network topology automatic discovery module, adapted to determine information of network nodes on a Virtual Label Switched Path, V-LSP, corresponding to the explicit route and the link resources, and interact with other member nodes of the logic transport network to exchange the information of the network nodes on the V-LSP and the link resources through an automatic discovery mechanism of the logic transport network; and
a resource distribution module, adapted to distribute, to at least one of a path computation server and other network nodes in the network, the information of the link resources and the network nodes on the V-LSP through a route spread mechanism after determining the information of the network nodes on the V-LSP corresponding to the explicit route and the link resources.
